# EUROPEAN PATENT APPLICATION

(11) **EP 2 098 531 A1**
(43) Date of publication of application: **09.09.2009**
(21) Application number: 09002595.8
(22) Date of filing: 24.02.2009
(51) Int. Cl.: C07F 9/655, B01J 31/26

(54) **Axially asymmetric phosphorus compound and production method thereof**

(30) Priority: 05.03.2008 JP 2008055146
(71) Applicant: National University Corporation Tokyo University of Agriculture and Technology, Fuchu-shi, Tokyo 183-8588 (JP); Takasago International Corporation, Tokyo-to 144-8721 (JP)
(72) Inventor: Tanaka, Ken, Fuchu-shi Tokyo 183-8588 (JP); Nishida, Goushi, Fuchu-shi Tokyo 183-8588 (JP); Yokozawa, Tohru, Hiratsuka-shi Kanagawa 254-0073 (JP); Yusa, Yukinori, Hiratsuka-shi Kanagawa 254-0073 (JP)
(74) Representative: Teipel, Stephan

(57) **Abstract**

To provide an axially asymmetric optically active biarylphosphorus compound that can easily produced without the step of optical resolution which was almost indispensable in conventional methods.

Solution:

A method for producing an axially asymmetric phosphorus compound represented by the general formula (1), comprising a cycloaddition reaction of a compound having a triple bond with the use of a catalyst containing rhodium metal and an optically active bisphosphine. 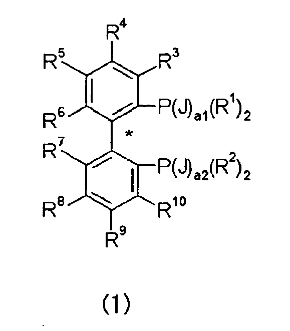 (In the formula, J is an oxygen atom, a sulfur atom or BH₃; R¹ and R² independently are an alkyl, cycloalkyl, aryl, alkoxy and aryloxy group; a1 and a2 independently are 0 or 1; R³ to R¹⁰ independently are an alkyl, cycloalkyl, aryl, alkoxy and aryloxy group; two among R³ to R¹⁰ may form a ring; and * is axial asymmetry.)

## Description

### Technical Field

The present invention relates to an axially asymmetric phosphorus compound useful as a ligand of a metal catalyst and a production method thereof.

### Background Art

Until now, many reports have been published on transition metal complexes usable as a catalyst for an asymmetric reaction such as asymmetric hydrogenation, asymmetric isomerization, and asymmetric hydrosilylation. In particular, complexes containing a transition metal such as ruthenium, rhodium, iridium, palladium, or the like and an optically active phosphine compound coordinated to the metal have widely been known as a high performance catalyst for an asymmetric synthesis. Among such optically active phosphine compounds, an optically active biaryl phosphine compound with axial asymmetry is useful as an optically active ligand of an asymmetric reaction catalyst (see, for example, Tetrahedron, 2005, Vol. 61, 5405-5432). Many of the processes to synthesize such an optically active biaryl compound involve homo- or cross-coupling of two aryl units, and require optical resolution to obtain an optically active substance after the coupling (see, for example, JP-A-2000-16997 and JP-A-10-182678). To synthesize an optically active biaryl phosphine compound, it is required to introduce a phosphorus atom site into the biaryl skeleton before or after the synthesis of the biaryl compound by the above-mentioned homo- or cross-coupling (see, for example, JP-A-10-182678 and JP-T-10-501234). On the other hand, recently, as a new technique for synthesizing an optically active biaryl compound, a technique involving an enantio-selective [2+2+2] cycloaddition using alkynes has also been developed (Organic Letters, 2006, Vol. 8, 3489-3492). A technique for producing a biaryl phosphine compound involving a similar [2+2+2] cycloaddition has also been developed, but no optically active phosphorus compounds are given by the technique (Organic Letters, 2007, Vol.9, 4925-4928).

### Summary of Invention

### Technical Problem

As described above, although the synthesis of a biaryl compound having an axially asymmetric structure by way of an enantio-selective [2+2+2] cycloaddition has been known, no process for synthesizing a compound with a phosphorus atom site introduced into the 2,2' position of the biaryl skeleton thereof is hitherto known.

Furthermore, it is indispensable to carry out optical resolution for a biaryl phosphorus compound synthesized by a conventional coupling method of aryl units and in some cases, one optical isomer may be unnecessary.

In this context, if it is possible to synthesize an axially asymmetric biaryl phosphorus compound in high optical purity from a substrate relatively easy to obtain through a reduced number of steps, an axially asymmetric optically active substance can easily be obtained without the step of optical resolution, which is almost indispensable step in a conventional method. The objective of the present invention is to provide such a production method and an axially asymmetric biaryl phosphorus compound to be produced in such a manner. Solution to Problem

As a result of keen examination to solve the problems, the inventors have found that an axially asymmetric biaryl phosphorus compound having high optical purity can be produced in one step by an enantio-selective [2+2+2] cycloaddition reaction of a compound having a triple bond in the presence of a catalyst containing rhodium and an optically active bisphosphine, and have completed the present invention.

The present invention includes:
1. a method for producing an axially asymmetric phosphorus compound represented by the following general formula (1): 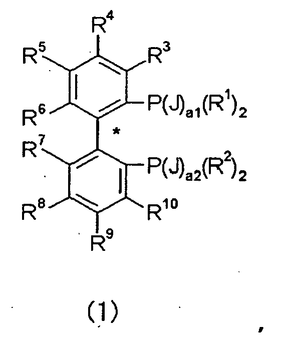 which comprises a cycloaddition of a compound having a triple bond with the use of a catalyst containing rhodium metal and an optically active bisphosphine (where, in the formula (1), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; a1 and a2 independently are 0 or 1; R³ to R¹⁰ independently are an alkyl group optionally having a substituent, a cycloalkyl group optionally having a substituent, an aryl group optionally having a substituent, an alkoxy group optionally having a substituent or an aryloxy group optionally having a substituent; two among R³ to R¹⁰ may form a ring; and * is axial asymmetry);
2. a method for producing an optically active compound represented by the following general formula (4) or (5) : 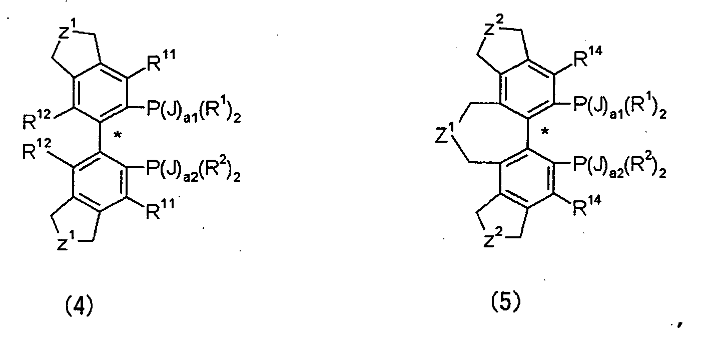 (where, in the formula (4), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; R¹¹ is a hydrogen atom, an alkyl group optionally having a substituent, a cycloalkyl group optionally having a substituent, or an aryl group optionally having a substituent; R¹² is an alkyl group optionally having a substituent, a cycloalkyl group optionally having a substituent, or an aryl group optionally having a substituent; Z¹ is a divalent group; a1 and a2 independently are 0 or 1; and * is axial asymmetry; and in the formula (5), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; R¹⁴ is a hydrogen atom, an alkyl group optionally having a substituent, a cycloalkyl group optionally having a substituent, or an aryl group optionally having a substituent; Z¹ and Z² independently are a divalent group; a1 and a2 independently are 0 or 1; and * is axial asymmetry), which comprises an intermolecular cycloaddition of a diyne compound represented by the following general formula (2) and a compound represented by the following general formula (3): 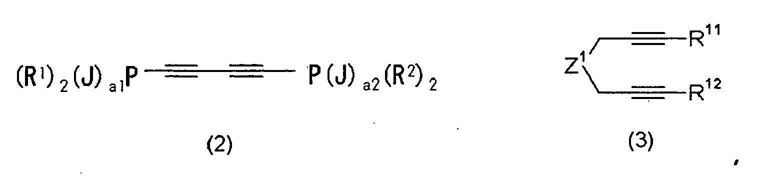 with the use of a catalyst containing rhodium metal and an optically active bisphosphine,
   (where, in the formula (2), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; and a1 and a2 independently are 0 or 1; and in the formula (3), Z¹ is a divalent group; and R¹¹ and R¹² independently are a hydrogen atom, an alkyl group optionally having a substituent, a cycloalkyl group optionally having a substituent, an aryl group optionally having a substituent, or R¹³ represented by the following formula: 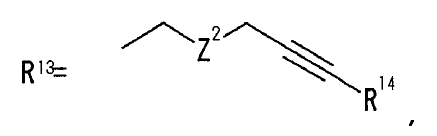 (where, in the formula R¹³, Z² is a divalent group; and R¹⁴ is a hydrogen atom, an alkyl group optionally having a substituent, a cycloalkyl group optionally having a substituent, or an aryl group optionally having a substituent));
3. the method according to the above-mentioned 1 or 2, wherein the catalyst containing rhodium metal and an optically active bisphosphine is a compound represented by the following general formula (6):

   [Rh(L)ₘ(Y)ₙ]X (6),

   (where, in the formula (6), L is an optically active bisphosphine represented by the following formula (7); Y is a nonconjugated diene compound; X is a counter anion; m is an integer 1 or 2; n is an integer 0 or 1; when m is 1, n is 0 or n is 1; and when m is 2, n is 0):

   R¹⁵R¹⁶P-Q-PR¹⁷R¹⁸ (7),

   (where, in the formula (7), R¹⁵, R¹⁶, R¹⁷, and R¹⁸ independently are an aryl group optionally having a substituent, a cycloalkyl group optionally having a substituent or an alkyl group optionally having a substituent; R¹⁵ in combination with R¹⁶ and/or R¹⁷ in combination with R¹⁸ may form a ring; and Q is a divalent arylene group optionally having a substituent or a ferrocenediyl group optionally having a substituent);
4. the method according to the above-mentioned 3, wherein a nonconjugated diene ligand is eliminated with the use of hydrogen gas in preparing the catalyst containing rhodium metal and an optically active bisphosphine; and
5. an optically active compound represented by the following general formula (8): 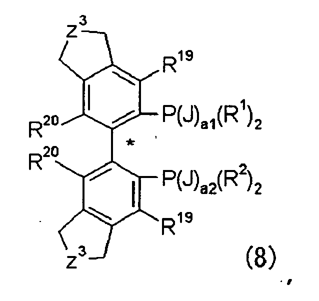 (where, in the formula (8), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; R¹⁹ is a hydrogen atom, an alkyl group optionally having a substituent, a cycloalkyl group optionally having a substituent, or an aryl group optionally having a substituent; R²⁰ is an alkyl group optionally having a substituent, a cycloalkyl group optionally having a substituent or an aryl group optionally having a substituent, or two R²⁰s may form a divalent group optionally having a hetero atom and optionally having a substituent; Z³ is a divalent group; a1 and a2 independently are 0 or 1; and * is axial asymmetry).

### Advantageous Effects of Invention

According to the process of the invention, since it is possible to enantio-selectively produce an optically active biaryl phosphorus compound in one step by reacting a compound having a plurality of triple bonds and a phosphorus compound having a diyne structure in the presence of a catalyst containing rhodium metal and an optically active bisphosphine, an axially asymmetric substance can be obtained without the step of optical resolution. Furthermore, an optically active biaryl phosphorus compound within the scope of the invention can easily be produced with the use of a substrate relatively easy to obtain and is useful as a ligand of a metal catalyst.

### Description of Embodiments

Hereinafter, the invention will be described in more detail.

A phosphorus compound of the invention is a phosphorus compound represented by the above-mentioned general formula (1), (4), (5) or (8), and can be produced by the production method of the invention, which will be described in detail below. In the general formulas (1), (4), (5) and (8), and R¹ and R² independently are an alkyl group optionally having a substituent, a cycloalkyl group optionally having a substituent, an aryl group optionally having a substituent, an alkoxy group optionally having a substituent or an aryloxy group optionally having a substituent.

Herein, the alkyl group represented by R¹ or R² may be, for example, a linear or branched alkyl group having 1 to 15 carbon atoms, preferably 1 to 10 carbon atoms, more preferably 1 to 6 carbon atoms. Specific examples include, for example, a methyl, ethyl, n-propyl, isopropyl, n-butyl, s-butyl, isobutyl, t-butyl, pentyl, and hexyl group. These alkyl groups may have a substituent, and the examples of the substituent include, for example, an alkoxy group and a halogen atom.

The cycloalkyl group represented by R¹ or R² may be a cycloalkyl group having 3 to 12 carbon atoms, and specific examples include a cyclopropyl, cyclobutyl, cyclopentyl, cyclohexyl, cycloheptyl, cyclooctyl, and adamantyl group. These cycloalkyl groups may have a substituent, and the examples of the substituent include, for example, an alkoxy group and a halogen atom.

The aryl group represented by R¹ or R² may be an aryl group having 6 to 18 carbon atoms, and specific examples include a phenyl, naphthyl, anthryl, phenanthryl, and biphenyl group. These aryl groups may have a substituent and examples of the substituent include linear or branched alkyl groups having 1 to 6 carbon atoms such as methyl and t-butyl; linear or branched alkoxy groups having 1 to 6 carbon atoms such as methoxy and t-butoxy; and halogen atoms such as chlorine, bromine, and fluorine; and a plurality of these substituents may be introduced into the aryl groups. Specific examples of these aryl groups having a substituent include, for example, a p-tolyl, m-tolyl, o-tolyl, 3,5-xylyl, 3,5-di-t-butylphenyl, p-t-butylphenyl, p-methoxyphenyl, 3,5-di-t-butyl-4-methoxyphenyl, p-chlorophenyl, m-chlorophenyl, p-fluorophenyl, and m-fluorophenyl group.

The alkoxy group represented by R¹ or R² may be, a linear or branched alkoxy group, for example, having 1 to 15 carbon atoms, preferably 1 to 10 carbon atoms, and more preferably 1 to 6 carbon atoms. Specific examples include, for example, a methoxy, ethoxy, n-propoxy, isopropoxy, n-butoxy, s-butoxy, isobutoxy, t-butoxy, pentyloxy, and hexyloxy group. These alkoxy groups may have a substituent, and the examples of the substituent include, for example, a halogen atom and an aryl group.

The aryloxy group represented by R¹ or R² may be an aryloxy group having 6 to 18 carbon atoms, and specific examples are phenyloxy, naphthyloxy, anthryloxy, phenanthryloxy, and biphenyloxy. These aryloxy groups may have a substituent and examples of the substituent include linear or branched alkyl groups having 1 to 6 carbon atoms such as methyl and t-butyl; linear or branched alkoxy groups having 1 to 6 carbon atoms such as methoxy and t-butoxy; and halogen atoms such as chlorine, bromine, and fluorine, and a plurality of these substituents may be introduced into the aryl group.

In the general formula (1), (4), (5) and (8), the alkyl group represented by R³ to R²⁰ may be a linear or branched alkyl group, for example, having 1 to 15 carbon atoms, preferably 1 to 10 carbon atoms, and more preferably 1 to 6 carbon atoms. Specific examples include, for example, a methyl, ethyl, n-propyl, isopropyl, n-butyl, s-butyl, isobutyl, t-butyl, pentyl, and hexyl group. These alkyl groups may have a substituent, and the examples of the substituent include, for example, an alkoxy group and a halogen atom.

The cycloalkyl group represented by R³ to R²⁰ may be a cycloalkyl group having 3 to 12 carbon atoms, and specific examples include a cyclopropyl, cyclobutyl, cyclopentyl, cyclohexyl, cycloheptyl, cyclooctyl, and adamantyl group. These cycloalkyl groups may have a substituent, and the examples of the substituent include, for example, an alkoxy group and a halogen atom.

The aryl group represented by R³ to R²⁰ may be an aryl group having 6 to 18 carbon atoms, and specific examples include a phenyl, naphthyl, anthryl, phenanthryl, and biphenyl group. These aryl groups may have a substituent and examples of the substituent include linear or branched alkyl groups having 1 to 6 carbon atoms such as methyl and t-butyl; linear or branched alkoxy groups having 1 to 6 carbon atoms such as methoxy and t-butoxy; and halogen atoms such as chlorine, bromine, and fluorine; and a plurality of these substituents may be introduced into the aryl groups.

The alkoxy group represented by R³ to R²⁰ may be, a linear or branched alkoxy group, for example, having 1 to 15 carbon atoms, preferably 1 to 10 carbon atoms, and more preferably 1 to 6 carbon atoms. Specific examples include, for example, a methoxy, ethoxy, n-propoxy, isopropoxy, n-butoxy, s-butoxy, isobutoxy, t-butoxy, pentyloxy, and hexyloxy group. These alkoxy groups may have a substituent, and the examples of the substituent include, for example, a halogen atom and an aryl group.

The aryloxy group represented by R³ to R²⁰ may be an aryloxy group having 6 to 18 carbon atoms, and specific examples are phenyloxy, naphthyloxy, anthryloxy, phenanthryloxy, and biphenyloxy. These aryloxy groups may have a substituent and examples of the substituent include linear or branched alkyl groups having 1 to 6 carbon atoms such as methyl and t-butyl; linear or branched alkoxy groups having 1 to 6 carbon atoms such as methoxy and t-butoxy; and halogen atoms such as chlorine, bromine, and fluorine, and a plurality of these substituents may be introduced into the aryl group.

Two groups selected from R³ to R¹⁰ in the general formula (1), R¹²s in the general formula (4), and R²⁰s in the general formula (8), may form a ring or a divalent group. Specific examples of the ring to be formed include aliphatic rings such as cyclobutane, cyclopentane and cyclohexane; and aromatic rings such as benzene, naphthalene, anthracene, and phenanthrene. The examples of the substituent on the ring include an alkyl group, an alkoxy group and a halogen atom, and specific examples include, for example, the above-mentioned groups.

The divalent group to be formed may be a methylene chain optionally having a substituent and optionally having a hetero atom such as an oxygen atom and a sulfur atom. The methylene chain in such a case may be, for example, preferably a methylene chain having 3 to 6 carbon atoms, and specific examples are trimethylene, tetramethylene, pentamethylene, and hexamethylene. A carbon atom in the above-mentioned methylene chain may be substituted by a hetero atom such as an oxygen atom and a sulfur atom, and specific example of such a group include a 2-oxatrimethylene, 3-oxapentamethylene, methylenedioxy, and 2,4-dioxapentamethylene group. The examples of the substituent on the methylene chain include an alkyl group having 1 to 4 carbon atoms, an alkoxy group having 1 to 4 carbon atoms, an alkoxycarbonyl group having an alkoxy group of 1 to 4 carbon atoms, and a halogen atom.

The divalent group denoted by Z¹, Z² or Z³ in the formulas (3), (4), (5) and (8) may include, for example, an oxygen atom, a sulfur atom, a methylene chain, NR^{N}, and Si(R^{Si})₂. Herein, R^{N} is an alkyl, aryl, alkanesulfonyl, arylsulfonyl, or acyl group, and R^{Si} is an alkyl or aryl group or may form a ring as Si(R^{Si})₂.

The methylene chain may include, for example, a linear or branched methylene chain and examples are methylene, ethylene, trimethylene, propylene, isopropylidene, 2,3-butanediyl, and difluoromethylene.

The alkyl group denoted by R^{N} of NR^{N} and R^{Si} of Si(R^{Si})₂ may include, for example, linear or branched alkyl groups having 1 to 6 carbon atoms, and specific examples are the above-mentioned alkyl groups. The aryl group represented by R^{N} or R^{Si} may include aryl groups having 6 to 18 carbon atoms, and specific examples are the above-mentioned aryl groups.

The alkanesulfonyl and arylsulfonyl group represented by R^{N} of NR^{N} may include, for example, a methanesulfonyl, trifluoromethanesulfonyl, benzenesulfonyl, and p-toluenesulfonyl group.

The acyl group represented by R^{N} may include, for example, linear or branched aliphatic acyl groups having 2 to 10 carbon atoms and aromatic acyl groups, and specific examples may include an acetyl, propanoyl, butyryl, pivaloyl, methoxycarbonyl, ethoxycarbonyl, t-butoxycarbonyl, benzyloxycarbonyl, benzoyl, and p-nitrobenzoyl group.

The ring formed as Si(R^{Si})₂ may be a silolane ring, a silinane ring, or a silepane ring.

In the invention, the phosphorus compounds represented by the general formula (1) are preferably the phosphorus compounds represented by the general formula (8).

Next, a method for producing an axially asymmetric optically active phosphorus compound, which can be used for producing the phosphorus compound of the invention (referred to simply as the production method of the invention in some cases), will be described.

As described in the following scheme 1, the production method of an axially asymmetric optically active phosphorus compound of the invention causes reaction in the presence of a catalyst containing rhodium metal and an optically active bisphosphine compound, and more particularly causes enantio-selective [2+2+2] cycloaddition.

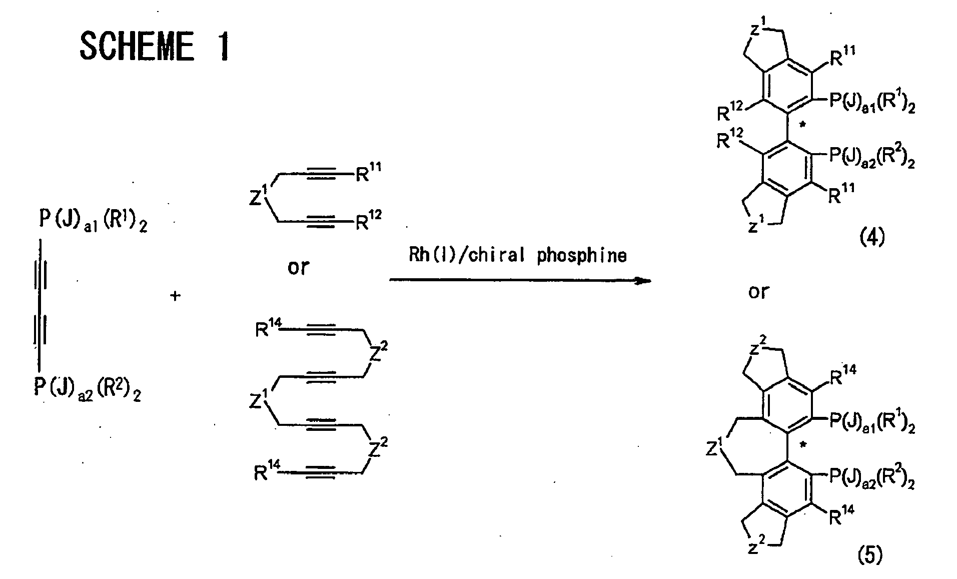

Definitions of the reference characters and examples of the groups represented by these reference characters described also in the schemes are the same as those described above.

The catalyst containing rhodium metal and an optically active bisphosphine compound used in the production method of the invention will be described.

As the rhodium source for the rhodium metal used as one component of the catalyst of the invention, rhodium compounds may be used, and preferable rhodium compounds may be complexes of rhodium(I) coordinated with an olefinic ligand. Specific examples of rhodium(I) complexes are [Rh(COD)₂]X, [Rh(NBD)₂]X, [Rh(ethylene)₂Cl]₂, [Rh(COE)₂Cl]₂, [Rh(COD)Cl]₂, and [Rh(NBD)Cl]₂. In the above-mentioned chemical formulas of the complexes, X is a counter anion such as Cl, Br, I, BF₄, OTf, ClO₄, SbF₆, PF₆, BPh₄, and B(3,5-CF₃)₂C₆H₃)₄); COE is cyclooctene; COD is 1,5-cyclooctadiene; and NBD is norbornadiene.

Examples of the optically active bisphosphine compound that is the other catalytic component used for the invention are those represented by the following general formula (7):

R¹⁵R¹⁶P-Q-PR¹⁷R¹⁸ (7)

(where, in the formula (7), R¹⁵, R¹⁶, R¹⁷, and R¹⁸ independently are an aryl group optionally having a substituent, a cycloalkyl group optionally having a substituent or an alkyl group optionally having a substituent; R¹⁵ in combination with R¹⁶ and/or R¹⁷ in combination with R¹⁸ may form a ring; and Q is a divalent arylene group optionally having a substituent or a ferrocenediyl group optionally having a substituent).

In the above formula, the aryl group denoted by R¹⁵, R¹⁶, R¹⁷, or R¹⁸ optionally having a substituent may be an aryl group having 6 to 14 carbon atoms, and specific examples are phenyl, naphthyl, anthryl, phenanthryl, and biphenyl. These aryl groups may have a substituent, and the substituent may be an alkyl, alkoxy, aryl, and heterocyclic group.

The alkyl group as a substituent of the aryl group may include, for example, linear or branched alkyl groups having 1 to 15 carbon atoms, preferably 1 to 10 carbon atoms, and more preferably 1 to 6 carbon atoms, and specific examples are methyl, ethyl, n-propyl, isopropyl, n-butyl, s-butyl, isobutyl, t-butyl, pentyl, and hexyl.

The alkoxy group as a substituent of the aryl group may include, for example, linear or branched alkoxy groups having 1 to 6 carbon atoms, and specific examples are methoxy, ethoxy, n-propoxy, isopropoxy, n-butoxy, s-butoxy, isobutoxy, t-butoxy, pentyloxy, and hexyloxy.

The aryl group as a substituent of the aryl group may include, for example, aryl groups having 6 to 14 carbon atoms, and specific examples are phenyl, naphthyl, anthryl, phenanthryl, and biphenyl.

The heterocyclic group as a substituent of the aryl group may include, for example, aliphatic heterocyclic groups and aromatic heterocyclic groups. The aliphatic heterocyclic groups may include, for example, 5- to 8-membered and preferably 5- or 6-membered mono-cyclic, polycyclic, and condensed aliphatic hetero rings having 2 to 14 carbon atoms and at least one, preferably 1 to 3 hetero atoms such as nitrogen, oxygen, and sulfur atoms. Specific examples of the aliphatic heterocyclic groups are 2-oxopyrrolidyl, piperidino, piperadinyl, morpholino, tetrahydrofuryl, tetrahydropyranyl, and tetrahydrothienyl. On the other hand, the aromatic heterocyclic groups may include, for example, 5- to 8-membered and preferably 5- or 6-membered mono-cyclic, polycyclic, and condensed cyclic heteroaryl groups having 2 to 15 carbon atoms and at least one, preferably 1 to 3 hetero atoms such as nitrogen, oxygen, and sulfur atoms. Specific examples are furyl, thienyl, pyridyl, pyrimidinyl, pyradinyl, pyridadinyl, pyrazolyl, imidazolyl, oxazolyl, thiazolyl, benzofuryl, benzothienyl, quinolyl, isoquinolyl, quinoxalyl, phthalazinyl, quinazolinyl, naphthyldinyl, cinnolinyl, benzoimidazolyl, benzoxazolyl, and benzothiazolyl.

The cycloalkyl denoted by R¹⁵, R¹⁶, R¹⁷, or R¹⁸ optionally having a substituent may be a 5- or 6-membered cycloalkyl group, and preferable cycloalkyl groups are cyclopentyl and cyclohexyl. These cycloalkyl groups may have one or more alkyl or alkoxy substituents as exemplified above for the aryl group.

The alkyl group denoted by R¹⁵, R¹⁶, R¹⁷, or R¹⁸ optionally having a substituent may be, for example, a linear or branched alkyl group having 1 to 15 carbon atoms, preferably 1 to 10 carbon atoms, more preferably 1 to 6 carbon atoms.
Specific examples include, for example, a methyl, ethyl, n-propyl, isopropyl, n-butyl, s-butyl, isobutyl, t-butyl, pentyl, and hexyl group. These alkyl groups may have a substituent, and the examples of the substituent include, for example, an alkoxy group and a halogen atom.

Furthermore, the ring formed by combination of R¹⁵ with R¹⁶ and/or R¹⁷ with R¹⁸ may be a 4-, 5-, or 6-membered ring containing a phosphorus atom to which R¹⁵, R¹⁶, R¹⁷, and R¹⁸ are bound. Specific examples of the ring are a phosphetane, phospholane, phosphane, 2,4-dimethylphosphetane, 2,4-diethylphosphetane, 2,5-dimethylphospholane, 2,5-diethylphospholane, 2,6-dimethylphosphane, and 2,6-diethylphosphane ring. These rings may be optically active substances.

The divalent arylene denoted by Q optionally having a substituent may be a phenylene, biphenyldiyl, and binaphthalenediyl group. The phenylene group includes, for example, an o- or m-phenylene group, and may have a substituent selected from an alkyl group such as a methyl, ethyl, n-propyl, isopropyl, n-butyl, s-butyl, isobutyl, and t-butyl group; an alkoxy group such as a methoxy, ethoxy, n-propoxy, isopropoxy, n-butoxy, s-butoxy, isobutoxy, and t-butoxy group; a hydroxyl group; an amino group; and a substituted amino group. The biphenyldiyl group and the binaphthalenediyl group are preferably have a 1,1'-biaryl-2,2'-diyl type structure, and may have a substituent selected from the above-mentioned alkyl group and alkoxy group; an alkylenedioxy group such as methylenedioxy, ethylenedioxy, and trimethylenedioxy; a hydroxyl group; an amino group; and a substituted amino group. Furthermore, the ferrocenediyl group also may have a substituent, and the substituent may be, for example, the above-mentioned alkyl group, alkoxy group, alkylenedioxy group, hydroxyl group, amino group, and substituted amino group.

Specific examples of the optically active bisphosphine compound represented by the general formula (7) may be a conventionally known bisphosphine, and one example is a compound represented by the following general formula (9). 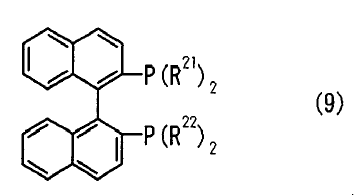 (In the formula, R²¹ and R²² independently are a phenyl group optionally having a substituent selected from a halogen atom, an alkyl group, and an alkoxy group, or are a cyclopentyl group or a cyclohexyl group.)

In the above R²¹ and R²², the alkyl group as a substituent of the phenyl may include, for example, linear or branched alkyl groups having 1 to 6 carbon atoms such as a methyl and t-butyl group; the alkoxy group as a substituent of the phenyl may include, for example, linear or branched alkoxy groups having 1 to 6 carbon atoms such as a methoxy and t-butoxy group; and the halogen atom as a substituent of the phenyl may include, for example, chlorine, bromine, and fluorine. A plurality of these substituents may be introduced into the phenyl group.

Specific examples of R²¹ and R²² are phenyl, p-tolyl, m-tolyl, o-tolyl, 3,5-xylyl, 3,5-di-t-butylphenyl, p-t-butylphenyl, p-methoxyphenyl, 3,5-di-t-butyl-4-methoxyphenyl, p-chlorophenyl, m-chlorophenyl, p-fluorophenyl, m-fluorophenyl, cyclopentyl, and cyclohexyl.

The binaphthyl ring that is the basic skeleton of the compound represented by the general formula (9) may have a substituent, and the substituent may include, for example, alkyl groups such as a methyl and t-butyl group; alkoxy groups such as a methoxy and t-butoxy group; trialkylsilyl groups such as a trimethylsilyl, triisopropylsilyl, and t-butyldimethylsilyl group; and triarylsilyl groups such as a triphenylsilyl group.

Another specific example of the optically active bisphosphine compound represented by the general formula (7) may be a compound represented by the following general formula (10).

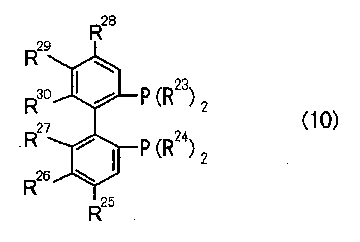

(In the formula, R²³ and R²⁴ independently are a phenyl group optionally having a substituent selected from a halogen atom, an alkyl group, and an alkoxy group, or are a cyclopentyl, or cyclohexyl group. R²⁵, R²⁶, R²⁷, R²⁸, R²⁹, and R³⁰ may be the same or different and independently are a hydrogen atom, an alkyl group, an alkoxy group, an acyloxy group, a halogen atom, a haloalkyl group, or a dialkylamino group; two among R²⁵, R²⁶, and R²⁷ may form a methylene chain optionally having a substituent or a (poly)methylenedioxy group optionally having a substituent; two among R²⁸, R²⁹, and R³⁰ may form a methylene chain optionally having a substituent or a (poly)methylenedioxy group optionally having a substituent; R²⁷ and R³⁰ may form a methylene chain optionally having a substituent or a (poly)methylenedioxy group optionally having a substituent; however, R²⁷ and R³⁰ are not a hydrogen atom.)

In the above R²³ and R²⁴, the alkyl group as a substituent of the phenyl may include, for example, linear or branched alkyl groups having 1 to 6 carbon atoms such as a methyl and t-butyl group; the alkoxy group as a substituent of the phenyl may include, for example, linear or branched alkoxy groups having 1 to 6 carbon atoms such as a methoxy and t-butoxy group; and the halogen atom as a substituent of the phenyl may include, for example, chlorine, bromine, and fluorine. A plurality of these substituents may be introduced into the phenyl group. Specific examples of R²³ and R²⁴ are phenyl, p-tolyl, m-tolyl, o-tolyl, 3,5-xylyl, 3,5-di-t-butylphenyl, p-t-butylphenyl, p-methoxyphenyl, 3,5-di-t-butyl-4-methoxyphenyl, p-chlorophenyl, m-chlorophenyl, p-fluorophenyl, m-fluorophenyl, cyclopentyl, and cyclohexyl.

The alkyl group denoted by R²⁵ to R³⁰ may include, for example, linear or branched alkyl groups having 1 to 6 carbon atoms such as a methyl and t-butyl group; the alkoxy group denoted by R²⁵ to R³⁰ may include, for example, linear or branched alkoxy groups having 1 to 6 carbon atoms such as a methoxy and t-butoxy group; the acyloxy group denoted by R²⁵ to R³⁰ may include, for example, acyloxy groups having 2 to 10 carbon atoms such as an acetoxy, propanoyloxy, trifluoroacetoxy, and benzoyloxy group; the halogen atom denoted by R²⁵ to R³⁰ may include, for example, chlorine, bromine, and fluorine; the haloalkyl group denoted by R²⁵ to R³⁰ may include, for example, haloalkyl groups having 1 to 4 carbon atoms such as a trifluoromethyl group; and the dialkylamino group denoted by R²⁵ to R³⁰ may include, for example, a dimethylamino and diethylamino group.

In the case where two of R²⁵, R²⁶, and R²⁷ form a methylene chain optionally having a substituent and in the case where two of R²⁸, R²⁹, and R³⁰ form a methylene chain optionally having a substituent, the methylene chain preferably includes, for example, methylene chains having 3 to 5 carbon atoms, and specific examples are trimethylene, tetramethylene, and pentamethylene. The substituent in the methylene chain optionally having a substituent may be an alkyl group or a halogen atom, and specific examples are the above-mentioned alkyl groups having 1 to 6 carbon atoms and a fluorine atom.

In the case where two of R²⁵, R²⁶, and R²⁷ form a (poly)methylenedioxy group optionally having a substituent and in the case where two of R²⁸, R²⁹, and R³⁰ form a (poly)methylenedioxy group optionally having a substituent, specific examples of the (poly)methylenedioxy group are methylenedioxy, ethylenedioxy, and trimethylenedioxy. The substituent in the (poly)methylenedioxy may be an alkyl group or a halogen atom, and specific examples are the above-mentioned alkyl groups having 1 to 6 carbon atoms and a fluorine atom.

Specific examples of the optically active bisphosphine compound represented by the general formula (9) or (10) are 2,2'-bis(diphenylphosphino)-1,1'-binaphthyl,
2,2'-bis[di(p-tolyl)phosphino]-1,1'-binaphthyl,
2,2'-bis[di(m-tolyl)phosphino]-1,1'-binaphthyl,
2,2'-bis[di(3,5-xylyl)phosphino]-1,1'-binaphthyl,
2,2'-bis[di(p-t-butylphenyl)phosphino]-1,1'-binaphthyl,
2,2'-bis[di(p-methoxyphenyl)phosphino]-1,1'-binaphthyl,
2,2'-bis[di(3,5-di-t-butyl-4-methoxyphenyl)phosphino]-1,1'-binaphthyl,
2,2'-bis[di(cyclopentyl)phosphino]-1,1'-binaphthyl,
2,2'-bis[di(cyclohexyl)phosphino]-1,1'-binaphthyl,
2,2'-bis(diphenylphosphino)-5,5',6,6',7,7',8,8'-octahydro-1 ,1'-binaphthyl,
2,2'-bis(di-p-tolylphosphino)-5,5',6,6',7,7',8,8'-octahydro -1,1'-binaphthyl,
2,2'-bis(di-m-tolylphosphino)-5,5',6,6',7,7',8,8'-octahydro -1,1'-binaphthyl,
2,2'-bis(di-3,5-xylylphosphino)-5,5',6,6',7,7',8,8'-octahyd ro-1,1'-binaphthyl,
2,2'-bis(di-p-t-butylphenylphosphino)-5,5',6,6',7,7',8,8'-o ctahydro-1,1'-binaphthyl,
2,2'-bis(di-p-methoxyphenylphosphino)-5,5',6,6',7,7',8,8'-o ctahydro-1,1'-binaphthyl,
2,2'-bis(di-p-chlorophenylphosphino)-5,5',6,6',7,7',8,8'-oc tahydro-1,1'-binaphthyl,
2,2'-bis(dicyclopentylphosphino)-5,5',6,6',7,7',8,8'-octahy dro-1,1'-binaphthyl,
2,2'-bis(dicyclohexylphosphino)-5,5',6,6',7,7',8,8'-octahyd ro-1,1'-binaphthyl,
((4,4'-bi-1,3-benzodioxole)-5,5'-diyl)bis(diphenylphosphine ) (hereinafter, referred to as segphos),
((4,4'-bi-1,3-benzodioxole)-5,5'-diyl)bis(di(3,5-dimethylph enyl)phosphine),
((4,4'-bi-1,3-benzodioxole)-5,5'-diyl)bis(di(3,5-di-t-butyl -4-methoxyphenyl)phosphine),
((4,4'-bi-1,3-benzodioxole)-5,5'-diyl)bis(di(4-methoxypheny l)phosphine),
((4,4'-bi-1,3-benzodioxole)-5,5'-diyl)bis(dicyclohexylphosp hine),
((4,4'-bi-1,3-benzodioxole)-5,5'-diyl)bis(bis(3,5-di-t-buty lphenyl)phosphine),
2,2'-bis(diphenylphosphino)-4,4',6,6'-tetramethyl-5,5'-dime thoxy-1,1'-biphenyl,
2,2'-bis(di-p-methoxyphenylphosphino)-4,4',6,6'-tetramethyl -5,5'-dimethoxy-1,1'-biphenyl,
2,2'-bis(diphenylphosphino)-4,4',6,6'-tetra(trifluoromethyl )-5,5'-dimethyl-1,1'-biphenyl,
2,2'-bis(diphenylphosphino)-4,6-di(trifluoromethyl)-4',6'-d imethyl-5'-methoxy-1,1'-biphenyl,
2-dicyclohexylphosphino)-2'-diphenylphosphino-4,4',6,6'-tet ramethyl-5,5'-dimethoxy-1,1'-biphenyl,
2,2'-bis(diphenylphosphino)-6,6'-dimethyl-1,1'-biphenyl,
2,2'-bis(diphenylphosphino)-4,4',6,6'-tetramethyl-1,1'-biph enyl),
2,2'-bis(diphenylphosphino)-3,3',6,6'-tetramethyl-1,1'-biph enyl,
2,2'-bis(diphenylphosphino)-4,4'-difluoro-6,6'-dimethyl-1,1 '-biphenyl,
2,2'-bis(diphenylphosphino)-4,4'-bis(dimethylamino)-6,6'-di methyl-1,1'-biphenyl,
2,2'-bis(di-p-tolylphosphino)-6,6'-dimethyl-1,1'-biphenyl,
2,2'-bis(di-o-tolylphosphino)-6,6'-dimethyl-1,1'-biphenyl,
2,2'-bis(di-m-fluorophenylphosphino)-6,6'-dimethyl-1,1'-bip henyl,
1,11-bis(diphenylphosphino)-5,7-dihydrobenzo[c,e]oxepine, 2,2'-bis(diphenylphosphino)-6,6'-dimethoxy-1,1'-biphenyl,
2,2'-bis(diphenylphosphino)-5,5',6,6'-tetramethoxy-1,1'-bip henyl,
2,2'-bis(di-p-tolylphosphino)-6,6'-dimethoxy-1,1'-biphenyl,
2,2'-bis(diphenylphosphino)-4,4',5,5',6,6'-hexamethoxy-1,1' -biphenyl, 1,2-bis(2,5-dimethylphospholano)benzene, 1,2-bis(2,5-diethylphospholano)benzene,
1,2-bis(2,5-diisopropylphospholano)benzene,
1-(2,5-dimethylphospholano)-2-(diphenylphosphino)benzene,
and 1,1'-bis(2,4-diethylphosphotano)ferrocene.

Additionally, specific examples of the optically active bisphosphine compound used in the invention may also include N,N-dimethyl-1-[1',2-bis(diphenylphosphino)ferrocenyl]ethyl amine, 2,3-bis(diphenylphosphino)butane,
1-cyclohexyl-1,2-bis(diphenylphosphino)ethane,
2,3-O-isopropylidene-2,3-dihydroxy-1,4-bis(diphenylphosphin o)butane, 1,2-bis[(o-methoxyphenyl)phenylphosphino]ethane,
1,2-bis(2,5-dimethylphospholano)ethane,
5,6-bis(diphenylphosphino)-2-norbornene,
N,N-bis(diphenylphosphino)-N,N'-bis(1-phenylethyl)ethylened iamine, 1,2-bis(diphenylphosphino)propane, and
2,4-bis(diphenylphosphino)pentane.

The catalyst used in the invention is a catalyst containing rhodium metal and an optically active bisphosphine, as described above, as catalytic components, and is a compound represented by the following general formula (6).

[Rh(L)ₘ(Y)ₙ]X (6)

(In the formula (6), L is an optically active bisphosphine represented by R¹⁵R¹⁶P-Q-PR¹⁷R¹⁸; Y is a nonconjugated diene compound; X is a counter anion; m is an integer 1 or 2; n is an integer 0 or 1; when m is 1, n is 0 or n is 1; when m is 2, n is 0. R¹⁵, R¹⁶, R¹⁷, and R¹⁸ independently are an aryl group optionally having a substituent, a cycloalkyl group optionally having a substituent or an alkyl group optionally having a substituent; R¹⁵ in combination with R16 and/or R17 in combination with R¹⁸ may form a ring; and Q is a divalent arylene group optionally having a substituent or a ferrocenediyl group optionally having a substituent.)

The optically active bisphosphine denoted by L, that is R¹⁵R¹⁶P-Q-PR¹⁷R¹⁸, in the above formula, is as described above.

Next, the compound represented by the general formula (6) as an example of the catalyst containing rhodium metal and the optically active bisphosphine used in the invention will be described in more detail.

In the general formula (6), the non-conjugated diene compound denoted by Y may be cyclic or acyclic, and in the case where the non-conjugated diene compound is a cyclic non-conjugated diene compound, the compound may include monocyclic, polycyclic, condensed cyclic or bicyclo compounds. Furthermore, the non-conjugated diene compound may include, for example, a non-conjugated diene compound having a substituent, that is, a substituted non-conjugated diene compound, and the substituent is not particularly limited as long as it does not negatively affect the production method of the invention. Preferable non-conjugated diene compounds are, for example, 1,5-cyclooctadiene, bicyclo[2,2,1]hepta-2,5-diene, and 1,5-hexadiene.

In the general formula (6), the counter anion denoted by X include, for example, chloride ion, bromide ion, iodide ion, BF₄, ClO₄, CF₃SO₃ (hereafter abbreviated as OTf), PF₆, SbF₆, B(3, 5-(CF₃)₂C₆H₃)₄, and BPh₄.

The compound represented by the general formula (6) used in the invention can be obtained, for example, by a conventionally known method as shown in the following scheme 2 under an inert gas atmosphere; or by counter-anion-exchange reaction with MX (M is a monovalent metal cation; and X is the same as described above) and subsequently by reacting a commercially available rhodium-olefin complex with an optically active bisphosphine denoted by L in an organic solvent such as methanol, ethanol, isopropanol, butanol, toluene, or tetrahydrofuran (accordingly, a compound (A) in the scheme 2 can be obtained), and optionally by further eliminating the olefin ligand by reacting the obtained compound with hydrogen gas (accordingly, a compound (C) in the scheme 2 can be obtained). Alternatively, the compound can be obtained by reaction of rhodium-olefin complex with 2 equivalent optically active bisphosphine denoted by the above L in an organic solvent such as methanol, ethanol, isopropanol, butanol, toluene, or tetrahydrofuran, and by successive counter-anion-exchange reaction with MX (M is a monovalent metal cation; and X is the same as described above) (accordingly, a compound (B) in the scheme 2 can be obtained). The COD in the chemical formula is 1,5-cyclooctadiene (the same shall apply hereinafter).

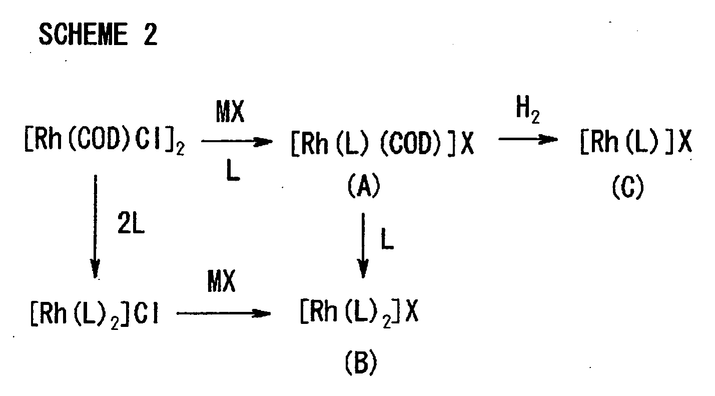

As shown in the following scheme 3, the compound represented by the general formula (6) used in the invention can be obtained also by reacting a rhodium-bisolefin complex previously subjected to counter-anion exchange reaction with an optically active bisphosphine denoted by L and optionally by further eliminating the olefin ligand with hydrogen gas.

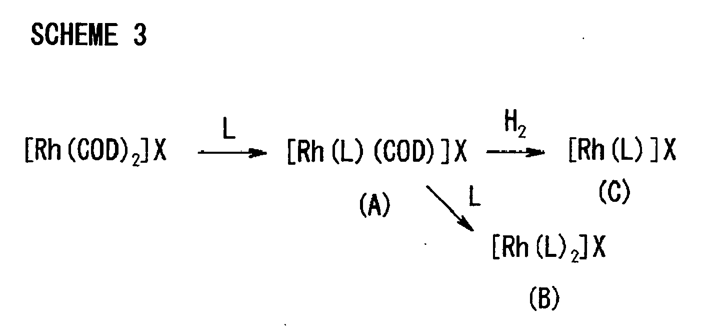

The amount of the optically active bisphosphine denoted by L to be added per mole of the center metal of the rhodium-olefin complex shown in the scheme 2 or the scheme 3 is preferably 1.0 to 2.4-fold moles, more preferably 1.05 to 2.2-fold moles since some part of the bisphosphine may be oxidized.

In the present invention, the rhodium-olefin complex used for producing the compound represented by the general formula (6) as the catalyst may be any of various complexes depending on the selected olefin ligand. However, for reasons of availability, a rhodium complex of 1,5-cyclooctadiene [Rh(COD)Cl]₂ and a rhodium complex of norbornadiene [Rh(NBD)Cl]₂ are particularly preferable. In the chemical formula, NBD is 2,5-norbornadiene (the same shall apply hereinafter).

In the counter-anion-exchange reaction, for example, silver salt (AgX) is preferably used as MX in terms of the handling easiness.

The catalytic active species in the compound represented by the general formula (6) is [Rh(L)ₘ]X. However, a precursor thereof, for example, the compound (A): [Rh(L)(COD)]X in the above-mentioned scheme, may also be used in the production method of the invention.

The compounds represented by the general formula (6) such as compounds (A), (B), and (C) in the above-mentioned scheme can be used for the production method of the invention without further purification after being prepared as a catalyst. Furthermore, in the production method of the invention, the catalyst containing rhodium metal and an optically active bisphosphine can be used immediately after the preparation thereof. Specifically, a rhodium compound and an optically active bisphosphine are reacted to prepare the catalyst, and subsequently a reactive substrate may be added.

The reaction solvent used in the production method of the invention is not particularly limited as long as it does not cause any adverse effect on the reaction, and examples may include amides such as N,N-dimethylformamide, formamide, and N,N-dimethylacetamide; halohydrocarbons such as dichloromethane, 1,2-dichloroethane, chloroform, carbon tetrachloride, and o-dichlorobenzene; aliphatic hydrocarbons such as pentane, hexane, heptane, octane, decane, and cyclohexane; aromatic hydrocarbons such as benzene, toluene, and xylene; non-nucleophilic alcohols such as tert-butanol; ethers such as diethyl ether, diisopropyl ether, tert-butyl methyl ether, dimethoxyethane, ethylene glycol diethyl ether, tetrahydrofuran, 1,4-dioxane, and 1,3-dioxolane; and sulfoxides such as dimethyl sulfoxide. These reaction solvents may be used alone or in a suitable combination of two or more thereof.

In the production method of the invention, the usage of about 1 to 5 mol% of the catalyst containing rhodium metal and an optically active bisphosphine in terms of rhodium metal, to one of the reaction substrates, is typically sufficient.

In the production method of the invention, the reaction temperature for a [2+2+2] cycloaddition differs in accordance with the substrate used. However it is typically -20°C to 100°C and preferably in a range of 0°C to 50°C. The reaction time naturally differs in accordance with the substrate used. However, it is typically 30 minutes to 30 hours and preferably 1 hour to 20 hours. The reaction is preferably carried out in an inert gas such as nitrogen or argon. In addition, with respect to the phosphorus compound represented by the formula (1), (4), (5) or (8), a compound in which a1 and a2 are 0 can easily be produced by a conventional reaction (e.g. a method of reduction reaction) of a compound in which corresponding a1 and a2 are 1.

On completion of the reaction, post-treatment which is routinely carried out in this kind of field such as filtration, silica gel column chromatography, or the like is carried out, and purification such as crystallization, distillation, and various kinds of chromatography may be carried out alone or in combination to obtain an aimed optically active phosphorus compound.

### Examples

Hereinafter, the invention will be more specifically described by referring to the examples below. However, the invention is not limited to the illustrated examples. The optical purity was determined by HPLC (high performance liquid chromatography) using an optically active column (SUMICHIRAL OA-3100).

### Example 1

### Preparation of optically active biaryldiphosphonate

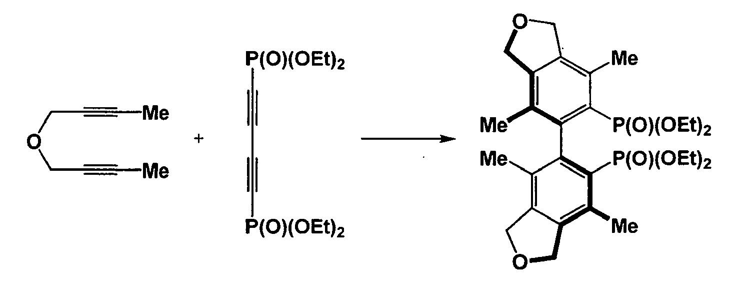

(Me and Et in the scheme are a methyl and ethyl group respectively.)

According to the above reaction scheme, optically active biaryl phosphine oxide was produced. The 5-oxa-2,7-nonadiyne as one substrate of this example was synthesized according to the description in K. Tanaka et al., Angew. Chem. Int. Ed. 2007, 46, 3951-3954. The bisphosphonobutadiynes as the other substrate were synthesized according to the description in V. Tomberli et al., Phosphorus, Sulfur and Silicon 2000, 160, 251-269.

Under an argon atmosphere, (R)-segphos (6.2 mg, 0.010 mmol), [Rh(COD)₂]BF₄ (4.1 mg, 0.010 mmol), and 1.0 mL of methylene chloride were placed into a schlenk tube, and stirred for 5 minutes. Then, hydrogen gas was introduced into the schlenk tube, and the mixture was stirred for 1 hour. Successively, the reaction mixture was concentrated to dryness in vacuo, and 0.4 mL of methylene chloride was added thereto. To the mixture, a solution of bisphosphonobutadiyne compound (64.4 mg, 0.200 mmol) shown in the above reaction scheme in 0.4 mL of methylene chloride was added, and then a solution of nonadiyne compound (73.3 mg, 0.600 mmol) in 1.2 mL of methylene chloride was added dropwise over 15 minutes. Then, the mixture was stirred at room temperature for 1 hour. Concentration of the reaction mixture and subsequent purification by thin-layer chromatography (ethyl acetate/triethylamine=20/1) gave 73.5 mg of the target material as a colorless solid in a yield of 65%. The optical purity of the obtained target material was not less than 99%ee ((S)-(-) form).
[α]²⁵_{D} -15.4° (c 3.29, CHCl₃, >99% ee); IR (neat): 2979, 2928, 1401, 1255, 1052, 959 cm-¹; ¹H NMR (CDCl₃, 300 MHz) : δ 5.17 (s, 4H), 5.13 (s, 4H), 4.10-3.85 (m, 6H), 3.85-3.66 (m, 2H), 2.44 (s, 6H), 1.63 (s, 6H), 1.21 (t, J = 6.9 Hz, 6H), 1.15 (t, J = 6.9 Hz); ¹³C NMR (CDCl₃, 75 MHz) : δ 145.82, 145.77, 145.7, 145.6, 141.8, 141.7, 138.0, 137.8, 132.7, 132.6, 127.1, 127.0, 126.8, 124.6, 74.50, 74.46, 74.4, 61.03, 60.96, 60.8, 18.83, 18.79, 16.67, 16.66, 16.3, 16.22, 16.20, 16.1; ³¹P NMR (CDCl₃, 121 MHz): δ19.2; SUMICHIRAL OA-3100, hexane/EtOH = 80:20, 1.0 mL/min, retention times: 11.3 min (major isomer) and 12.7 min (minor isomer).

The structural formula of (R)-segphos is shown below. 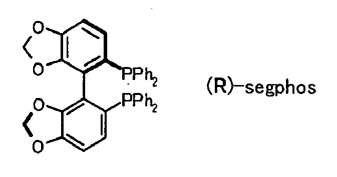 (In the formula, Ph is a phenyl group.)

### Examples 2 and 3

The results obtained according to the method of Example 1 are shown in Table 1 below. Also, the structural formula of (R)-BINAP is shown below. 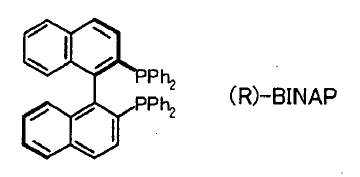 (In the formula, Ph is a phenyl group.)

**Table 1**

| Example | Optically active bisphosphine | Ratio of catalyst to bisphosphonobutadiyne (mol%) | Yield (%) | Optical purity (%ee) |
|---|---|---|---|---|
| 2 | (S)-segphos | 5.0 | 59 | 99 |
| 3 | (R)-binap | 10.0 | 19 | 91 |

The amount of nonadiyne was 2.1 equivalents in Example 3.

### Example 4

### Preparation of optically active biaryldiphosphine

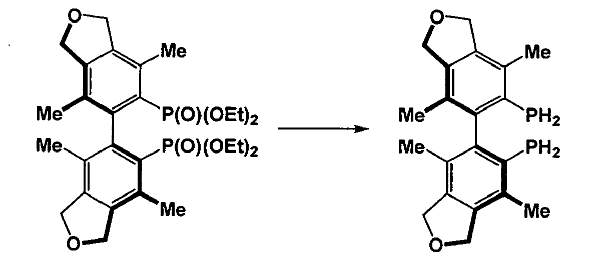

(Me and Et in the scheme are the same as above.)

Under a nitrogen atmosphere, lithium aluminum hydride (200 mg, 4.8 mmol) and 3.0 mL of tetrahydrofuran were placed into a schlenk tube, and cooled to -78°C. Trimethylsilylchloride (610 µL) was added thereto, and the temperature of the mixture was gradually raised to room temperature. After stirring at room temperature for 1 hour, the mixture was again cooled to -78°C, and a solution of diphosphonate (453 mg, 0.8 mmol) as a substrate in 3.0 mL of tetrahydrofuran was added dropwise slowly. After stirring at room temperature for 24 hours, 2.0mL of toluene, 0.2mL of distilled water, 0.2mL of 15% NaOH aqueous solution and 0.2 mL of distilled water were sequentially added, and further stirred for 1 hour. Celite filtration to remove insoluble matters, and washing with dichloromethane were performed. The filtrate was concentrated to dryness to give a white solid (270 mg, yield: 94%).
(S)-(4,4',7,7'-tetramethyl-1,1',3,3'-tetrahydro-5,5'-biisob enzofuran-6,6'-diyl)diphosphine;
¹H NMR (CD₂Cl₂, 300 MHz): δ 5.16 (brs, 4H), 5.12 (brs, 4H), 3.72-3.70 (m, 2H), 3.02-3.00 (m, 2H), 2.28 (s, 6H), 1.74 (s, 6H)
³¹P NMR (CD₂Cl₂, 121 MHz): δ -150.8

### Example 5

### Preparation of optically active biaryldiphosphinechloride

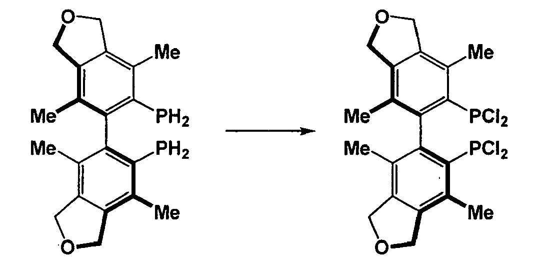

(Me in the scheme is the same as above.)

Under a nitrogen atmosphere, diphosphine (2.2 g, 6.1 mmol) as the substrate shown in the above scheme, triphosgene (3.8 g, 12.8 mmol) and 40 mL of dichloromethane were placed in a 200 mL flask. The mixture was cooled to -78°C, and triethylamine (0.3 mL, 2.2 mmol) was added dropwise slowly. After stirring at room temperature for 24 hours, the mixture was again cooled to -78°C. After triphosgene (3.8 g, 12.8 mmol) and triethylamine (0.5 mL, 3.6 mmol) were added, the mixture was further stirred at room temperature for 24 hours. Concentration of the resultant reaction mixture under high vacuum gave the target material as a mixture with 2 equivalents of triethylamine hydrochloride (4.7 g, quantitative yield). (S)-(4,4',7,7'-tetramethyl-1,1',3,3'-tetrahydro-5,5'-biisob enzofuran-6,6'-diyl)bis(dichlorophosphine);
¹H NMR (CD₂Cl₂, 300 MHz) : δ 5.19 (brs, 4H), 5.15 (brs, 4H), 2.70 (s, 6H), 1.73 (s, 6H)
³¹P NMR (CD₂Cl₂, 121 MHz): δ 160.0

### Example 6

### Preparation of optically active biaryldiphenylphosphine

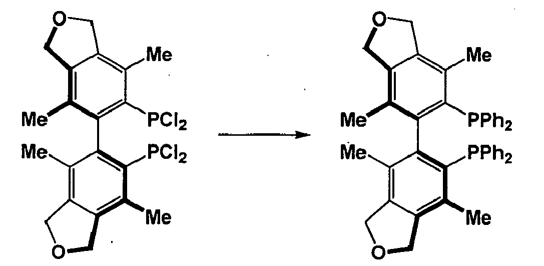

(Me in the scheme is the same as above, and Ph is a phenyl group.)

Under a nitrogen atmosphere, dichlorophosphine·2(triethylamine hydrochloride) (3.4 g, 4.4 mmol) as the substrate shown in the above scheme, and 40 mL of tetrahydrofuran were placed in a 200 mL flask. The mixture was cooled to 0°C, and 44 mL of phenylmagnesium bromide (2 mol/L solution in THF) was added dropwise slowly. After stirring at room temperature for 24 hours, the reaction mixture was concentrated and purified with a silica gel column (chloroform/methanol =100/1 to 30/1) to give the target material (270 mg, yield: 10%).
(S)-(4,4',7,7'-tetramethyl-1,1',3,3'-tetrahydro-5,5'-biisob enzofuran-6,6'-diyl)bis(diphenylphosphine);
¹H NMR (CD₂Cl₂, 300 MHz): δ 7.40-7.00(m, 20H), δ 5.09-4.95 (m, 8H), 1.62 (s, 6H), 1.49 (s, 6H)
³¹P NMR (CD₂Cl₂, 121 MHz): δ -15.5

### Example 7

### Preparation of optically active biaryldiphosphineoxide

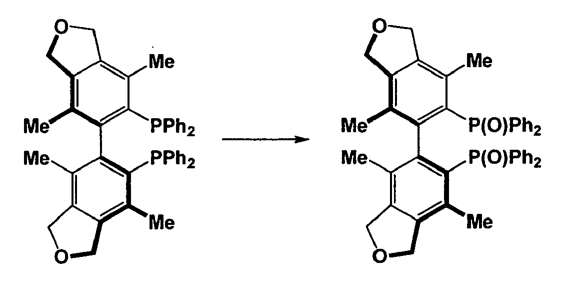

(Me and Ph in the scheme are the same as above.)
Diphosphine (100 mg, 0.15 mmol) as the substrate shown in the above scheme was dissolved in 1.0 mL of chloroform, and 1.0 mL of hydrogen peroxide solution was added thereto. After stirring at room temperature for 1 hour, the organic phase was separated. Concentration of the organic phase was performed to give a targeted pale-yellow material (100 mg, yield: 96%). (S)-(4,4',7,7'-tetramethyl-1,1',3,3'-tetrahydro-5,5'-biisob enzofuran-6,6'-diyl)bis(diphenylphosphineoxide);
The optical purity determined by HPLC analysis was not less than 99%ee.
¹H NMR (CD₂Cl₂, 300 MHz): δ 7.35-7.61(m, 20H), δ 5.14-4.98 (m, 8H), 2.24 (s, 6H), 2.08 (s, 6H)
³¹P NMR (CD₂Cl₂, 121 MHz): δ 29.7
Analytical method of optical purity
SUMICHIRAL OA-3100 X 2, 30°C, 254 nm, 1 mL/min,
Hexane/EtOH=70/30
(R)-form 46.7 min, (S)-form 49.1 min

### Example 8

### Application to an asymmetric hydrogenation

The asymmetric hydrogenation of enamide was performed following the scheme below. The results are shown in Table 2 below. The conversion rate and optical purity were determined by GC or HPLC. 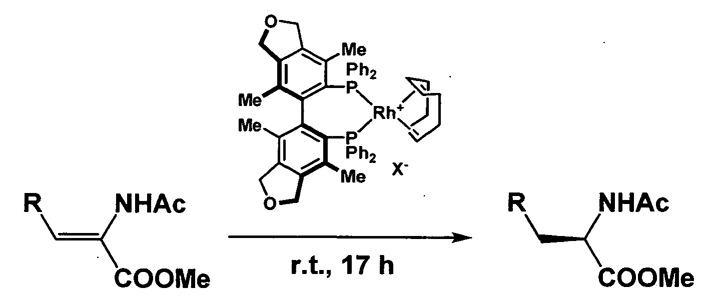 (Me and Ph in the scheme are the same as above; Ac is an acetyl group; R is an atom or a group in the Table 2; X is a counter anion in the Table 2; and r. t. is room temperature.

**Table 2**

| R | X | H₂ | Solvent | Conversion rate | Optical purity |
|---|---|---|---|---|---|
| | | (MPa) | | (%) | (%ee(R)) |
| H | BF₄ | 0.1 | MeOH | >99 | 44 |
| H | BF₄ | 0.5 | MeOH | >99 | 50 |
| H | OTf | 0.1 | MeOH | >99 | 25 |
| H | SbF₆ | 0.1 | MeOH | >99 | 50 |
| H | SbF₆ | 0.1 | CH₂Cl₂ | 24 | 80 |
| H | SbF₆ | 0.1 | (CH₂Cl)₂ | 28 | 78 |
| H | SbF₆ | 0.5 | (CH₂Cl)₂ | >99 | 76 |
| Ph | SbF₆ | 0.5 | CH₂Cl₂ | >99 | 21 |

(Me and Ph in the Table are the same as above.)

### Preparation of rhodium complexes as a catalyst

Under a nitrogen atmosphere, the ligand obtained in the above Example 6 (16.6 mg, 0.025 mmol), [Rh(COD)₂]BF₄ (10.2 mg, 0.025 mmol) and 0.7 mL of dichloromethane were placed in a 20 mL schlenk tube, and stirred at room temperature for 1 hour. The resultant reaction mixture was then dried. ³¹P-NMR showed that the target material was singly produced.
³¹P NMR (CD₂Cl₂, 121 MHz): δ 19.0 (J = 143 Hz)

Complexes having a counteranion other than BF4 were also prepared in the same manner.

### Asymmetric hydrogenation of enamide

Under a nitrogen atmosphere, a rhodium complex (0.01 mmol) prepared in the above-mentioned manner, 2.0 mL of a solvent and a substrate (1 mmol) were placed in an autoclave. The gas in the autoclave was replaced by hydrogen gas, and stirring at room temperature for 17 hours was performed for hydrogenation. The conversion rate and optical purity of the resultant product were determined by HPLC (R=Ph) or GC (R=H).

### Industrial applicability

According to the method of the present invention, an axially asymmetric phosphorus compound useful as a ligand of a metal catalyst can be easily produced.

## Claims

1. A method for producing an axially asymmetric phosphorus compound represented by the following general formula (1): 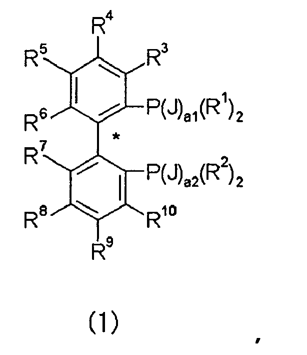 which comprises a cycloaddition of a compound having a triple bond with the use of a catalyst containing rhodium metal and an optically active bisphosphine, (where, in the formula (1), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; a1 and a2 independently are 0 or 1; R³ to R¹⁰ independently are an alkyl group optionally having a substituent, a cycloalkyl group optionally having a substituent, an aryl group optionally having a substituent, an alkoxy group optionally having a substituent or an aryloxy group optionally having a substituent; two among R³ to R¹⁰ may form a ring; and * is axial asymmetry).

2. A method for producing an optically active compound represented by the following general formula (4) or (5): 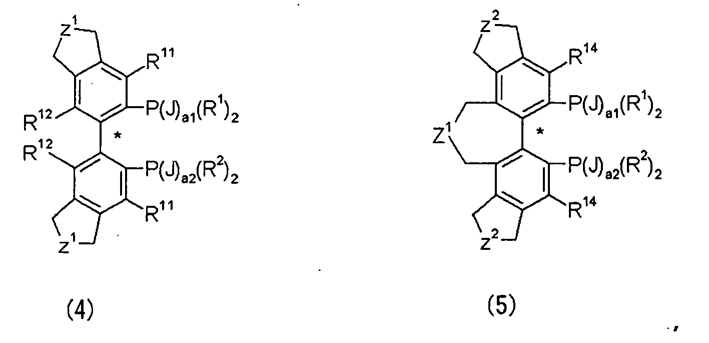 (where, in the formula (4), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; R¹¹ is a hydrogen atom, an alkyl group optionally having a substituent, a cycloalkyl group optionally having a substituent, or an aryl group optionally having a substituent; R¹² is an alkyl group optionally having a substituent, a cycloalkyl group optionally having a substituent, or an aryl group optionally having a substituent; Z¹ is a divalent group; a1 and a2 independently are 0 or 1; and * is axial asymmetry; and in the formula (5), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; R¹⁴ is a hydrogen atom, an alkyl group optionally having a substituent, a cycloalkyl group optionally having a substituent, or an aryl group optionally having a substituent; Z¹ and Z² independently are a divalent group; a1 and a2 independently are 0 or 1; and * is axial asymmetry), which comprises an intermolecular cycloaddition of a diyne compound represented by the following general formula (2) and a compound represented by the following general formula (3): 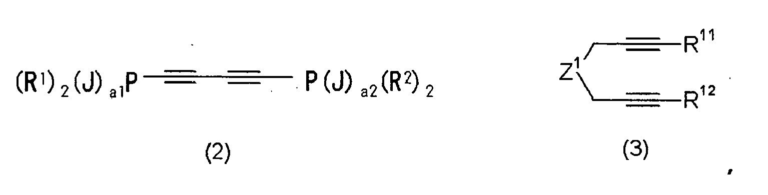 with the use of a catalyst containing rhodium metal and an optically active bisphosphine,
(where, in the formula (2), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; and a1 and a2 independently are 0 or 1; and in the formula (3), Z¹ is a divalent group; and R¹¹ and R¹² independently are a hydrogen atom, an alkyl group optionally having a substituent, a cycloalkyl group optionally having a substituent, an aryl group optionally having a substituent, or R¹³ represented by the following formula: 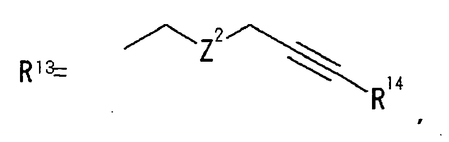 (where, in the formula R¹³ , Z² is a divalent group; and R¹⁴ is a hydrogen atom, an alkyl group optionally having a substituent, a cycloalkyl group optionally having a substituent, or an aryl group optionally having a substituent)).

3. The method according to claim 1 or 2, wherein the catalyst containing rhodium metal and an optically active bisphosphine is a compound represented by the following general formula (6) :
[Rh(L)ₘ(Y)ₙ]X (6),
(where, in the formula (6), L is an optically active bisphosphine represented by the following formula (7); Y is a nonconjugated diene compound; X is a counter anion; m is an integer 1 or 2; n is an integer 0 or 1; when m is 1, n is 0 or n is 1; when m is 2, n is 0):
R¹⁵R¹⁶P-Q-PR¹⁷R¹⁸ (7),
(where, in the formula (7), R¹⁵, R¹⁶, R¹⁷, and R¹⁸ independently are an aryl group optionally having a substituent, a cycloalkyl group optionally having a substituent or an alkyl group optionally having a substituent; R¹⁵ in combination with R¹⁶ and/or R¹⁷ in combination with R¹⁸ may form a ring; and Q is a divalent arylene group optionally having a substituent or a ferrocenediyl group optionally having a substituent).

4. The method according to claim 3, wherein a nonconjugated diene ligand is eliminated with the use of hydrogen gas in preparing the catalyst containing rhodium metal and an optically active bisphosphine.

5. An optically active compound represented by the following general formula (8): 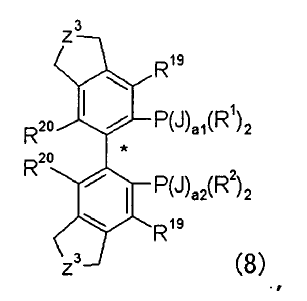 (where, in the formula (8), J is an oxygen atom, a sulfur atom or BH₃; R¹ and R² may be the same or different and independently are an alkyl group optionally having a substituent, a cycloalkyl group optionally having a substituent, an aryl group optionally having a substituent, an alkoxy group optionally having a substituent or an aryloxy group optionally having a substituent; R¹⁹ is a hydrogen atom, an alkyl group optionally having a substituent, a cycloalkyl group optionally having a substituent, or an aryl group optionally having a substituent; R²⁰ is an alkyl group optionally having a substituent, a cycloalkyl group optionally having a substituent or an aryl group optionally having a substituent, or two R²⁰s may form a divalent group optionally having a hetero atom and optionally having a substituent; Z³ is a divalent group; a1 and a2 independently are 0 or 1; and * is axial asymmetry).
